# FASCICULE DE BREVET EUROPEEN

(11) **EP 2 354 498 B1**
(45) Date de publication et mention de la délivrance du brevet: **08.01.2014**
(21) Numéro de dépôt: 10290615.3
(22) Date de dépôt: 19.11.2010
(51) Int. Cl.: F02D 13/02, F02B 25/02

(54) **Procédé de balayage des gaz brûles résiduels d'un moteur multi cylindres à combustion interne suralimenté à injection directe**
Verfahren zur Spülung der verbrannten Abgase einer mehrzylindrigen aufgeladenen Brennkraftmaschine mit Direkteinspritzung.
Method of scavenging residual combustion gases of a multicylinder supercharged direct-injection internal combustion engine.

(30) Priorité: 19.01.2010 FR 1000192
(43) Date de publication de la demande: 10.08.2011
(73) Titulaire: IFP Energies nouvelles, 92852 Rueil Malmaison Cedex (FR)
(72) Inventeur: Bression, Guillaume, 94300 Vincennes (FR)

(56) Documents cités:
- FR-A1- 2 922 270
- FR-A1- 2 922 955

## Description

La présente invention se rapporte à un procédé de balayage des gaz brûlés résiduels d'un moteur à combustion interne suralimenté à injection directe.

Comme cela est largement connu, la puissance délivrée par un moteur à combustion interne est dépendante de la quantité d'air introduite dans la chambre de combustion de ce moteur, quantité d'air qui est elle-même proportionnelle à la densité de cet air.

Ainsi, il est habituel d'augmenter cette quantité d'air au moyen d'une compression de l'air extérieur avant qu'il ne soit admis dans cette chambre de combustion lors d'un besoin d'une forte puissance. Cette opération, appelée suralimentation, peut être réalisée par tous moyens, tel qu'un turbocompresseur ou un compresseur entraîné, comme un compresseur à vis.

En outre, pour pouvoir encore plus augmenter cette quantité d'air dans la chambre de combustion du cylindre, il est prévu d'évacuer les gaz brûlés résiduels contenus initialement dans le volume mort de la chambre de combustion au point mort haut du piston pour les remplacer par de l'air suralimenté. Cette étape est plus communément appelée balayage des gaz brûlés et se réalise généralement avant la fin de la phase d'échappement du moteur.

Comme cela est connu par le document FR 2 886 342, ce balayage est réalisé, en fin de phase d'échappement du moteur et en début de phase d'admission, par un croisement entre les soupapes d'échappement et d'admission d'un même cylindre. Ce croisement est réalisé en ouvrant simultanément ces soupapes d'échappement et d'admission pendant quelques degrés à quelques dizaines de degrés d'angle de rotation de vilebrequin.

Grâce à cela, l'air d'admission est introduit dans la chambre de combustion avant la fin de la phase d'échappement en repoussant les gaz d'échappement qui y sont contenus. Ces gaz sont ainsi évacués au travers de la soupape d'échappement et sont remplacés par de l'air d'admission.

Ce type de moteur bien que donnant satisfaction présente néanmoins des inconvénients non négligeables.

En effet, un tel balayage nécessite la réalisation d'embrèvements de forte profondeur dans le piston, ce qui a pour conséquence de dégrader la forme de la chambre de combustion ainsi que le déroulement de la combustion du mélange carburé. De plus, ce type de moteur impose une modification en parallèle des angles d'ouverture des soupapes d'échappement et de fermeture des soupapes d'admission.

Il est également connu par le document FR 2 926 850 du demandeur un autre procédé de balayage des gaz brûlés résiduels par lequel une séquence d'ouverture/fermeture de la soupape d'échappement est réalisée lors de la phase d'échappement du moteur, et pendant cette séquence d'ouverture/fermeture de la soupape d'échappement, une séquence d'ouverture/fermeture de la soupape d'admission est réalisée de façon à effectuer le balayage des gaz brûlés résiduels.

Un tel procédé présente l'inconvénient selon lequel la pression à l'échappement peut être supérieure à la pression à l'admission bien avant que la phase de balayage ne soit terminée.

Ceci provient généralement du fait que l'onde de pression des gaz d'échappement provenant d'un cylindre voisin arrive à la soupape d'échappement du cylindre en balayage, généralement au travers du collecteur d'échappement, en augmentant ainsi la pression à l'échappement de ce cylindre.

Cette pression élevée à l'échappement de ce cylindre génère un obstacle à l'évacuation des gaz brûlés vers l'échappement, ce qui empêche l'introduction d'air d'admission suralimenté dans la chambre de combustion. Par cela, la quantité d'air suralimenté contenue dans la chambre de combustion n'est pas suffisante pour obtenir la puissance souhaitée du moteur.

Le procédé décrit dans FR 2 922 955 consiste à réaliser une séquence d'ouverture/fermeture conventionnelle de la soupape d'échappement lors la phase d'échappement du moteur et à réaliser une autre séquence d'ouverture/fermeture de cette soupape lors de phase d'admission du moteur et, pendant cette phase d'admission, à modifier la loi de levée de la soupape d'admission de manière à pouvoir contrôler la quantité de gaz d'échappement réintroduite dans la chambre de combustion pendant la phase d'admission .

Ce document ne divulgue pas un procédé pour réaliser une phase de balayage de gaz brulés dans la chambre de combustion d'un moteur mais uniquement un procédé pour contrôler la quantité de gaz recirculés par voie interne dans un moteur à combustion interne. Plus précisément, ce procédé concerne des étapes pour réintroduire ou retenir des gaz d'échappement à l'intérieur de la chambre de combustion pour la phase d'admission de ce moteur.

La présente invention se propose de remédier aux inconvénients ci-dessus grâce à un procédé de balayage de conception simple qui permet d'assurer l'évacuation quasi-totale des gaz brûlés résiduels tout en augmentant le remplissage de la chambre de combustion par de l'air suralimenté sans dégrader la forme de cette chambre.

A cet effet, la présente invention concerne un procédé de balayage des gaz brûlés résiduels d'un moteur à combustion interne multi cylindres à injection directe, notamment de type Diesel, avec un piston se déplaçant alternativement entre un point mort haut et un point mort bas, et selon lequel on réalise une phase de balayage des gaz brûlés par une séquence d'ouverture/fermeture d'au moins une soupape d'échappement lors la phase d'échappement du moteur et par au moins une séquence d'ouverture/fermeture d'au moins une soupape d'admission pendant cette séquence d'ouverture/fermeture de la soupape d'échappement, caractérisé en ce qu'il consiste à débuter la séquence d'ouverture/fermeture de la soupape d'échappement à un angle de vilebrequin situé après le point mort bas de la phase d'échappement et à terminer cette séquence au plus au point mort haut suivant.

Le procédé peut consister à débuter la séquence d'ouverture/fermeture de la soupape d'admission à l'angle de vilebrequin du début la séquence d'ouverture/fermeture de la soupape d'échappement.

Le procédé peut consister à débuter la séquence d'ouverture/fermeture de la soupape d'admission à un angle de vilebrequin après l'angle de vilebrequin du début la séquence d'ouverture/fermeture de la soupape d'échappement.

Le procédé peut consister à réaliser la fermeture de la soupape d'admission au plus à la fin de la phase d'échappement.

Le procédé peut consister à réaliser au moins une séquence d'ouverture/fermeture de la soupape d'admission dans une zone de la phase d'échappement où le différentiel de pression entre la pression d'admission et la pression d'échappement est le plus élevé.

Le procédé peut consister à diminuer la hauteur de la levée de la soupape d'admission pendant la phase d'échappement de manière à ce qu'elle soit inférieure à la hauteur de la levée de la soupape d'échappement.

Les autres caractéristiques et avantages de l'invention vont apparaître à la lecture de la description qui va suivre, donnée à titre uniquement illustratif et non limitatif, et à laquelle sont annexés :
- la figure 1 qui montre un moteur suralimenté à combustion interne utilisant le procédé selon l'invention ;
- la figure 2 qui montre des courbes illustrant les différentes lois de levée (L) des soupapes d'admission et d'échappement du cylindre durant l'étape de balayage cela en fonction de la rotation du vilebrequin (en degrés V) du moteur utilisant le procédé selon l'invention et
- la figure 3 qui est un graphique avec des courbes illustrant la pression (P en bar) à l'admission (Pa) et à l'échappement (Pe) d'un cylindre en fonction de la rotation du vilebrequin (en degrés V).

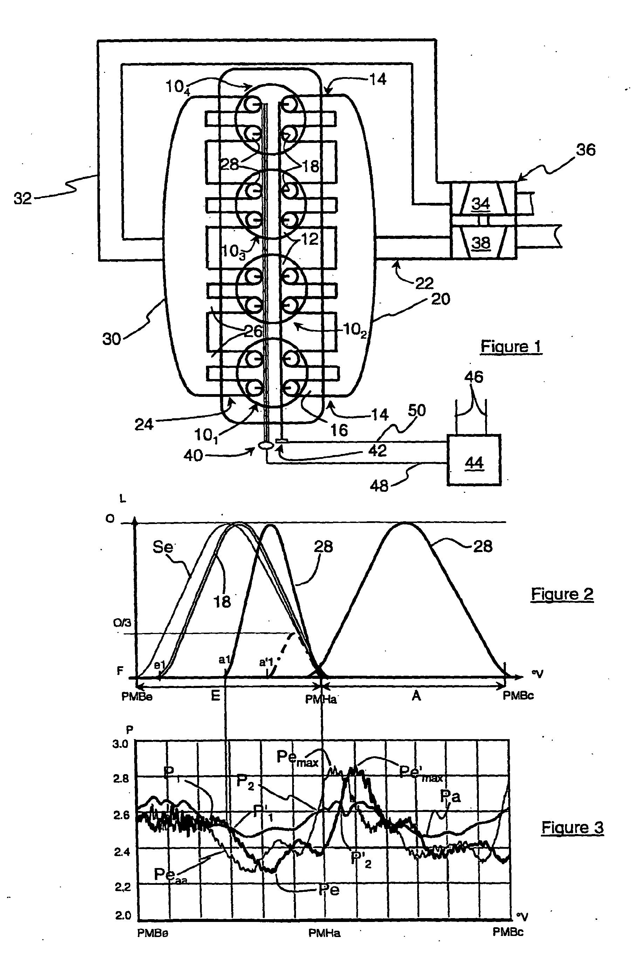

Sur la figure 1, le moteur à combustion interne illustré est un moteur à combustion interne suralimenté de type à autoallumage, notamment Diesel, fonctionnant selon un mode à quatre temps avec une phase d'admission A, de compression C, de détente D et d'échappement E.

Ce moteur comprend au moins deux cylindres 10, ici quatre cylindres 10₁ à 10₄, dans lesquels coulissent un piston (non représenté) en un mouvement alternatif rectiligne entre un point mort haut (PMH) et un point mort bas (PMB) en délimitant une chambre de combustion 12 dans laquelle se produit la combustion d'un mélange carburé.

Comme cela est largement connu, ce mélange carburé peut être, soit un mélange d'air suralimenté additionné à des gaz d'échappement recirculés (ou EGR) avec un carburant, soit un mélange d'air suralimenté avec un carburant.

Le cylindre comporte au moins un moyen d'échappement 14 des gaz brûlés, ici deux, comprenant une tubulure d'échappement 16 associée à un moyen d'obturation, comme une soupape d'échappement 18.

Les tubulures d'échappement 16 aboutissent à un collecteur d'échappement 20 permettant l'évacuation des gaz brûlés issus des chambres de combustion, ce collecteur étant relié à une ligne d'échappement 22.

Ce cylindre comporte également au moins un moyen d'admission 24, ici deux, qui comprend une tubulure d'admission 26 contrôlée par un moyen d'obturation, tel qu'une soupape d'admission 28.

De manière habituelle, un collecteur d'admission 30 est relié aux tubulures d'admission 26 et permet de répartir de l'air frais (généralement suralimenté additionné ou non de gaz d'échappement recirculés) dans les chambres de combustion 12.

Le collecteur d'admission est relié par une conduite 32 à la sortie de la section de compression 34 d'un turbocompresseur 36 alors que le collecteur d'échappement 20 est raccordé par la ligne 22 à l'entrée de la turbine 38 de ce turbocompresseur.

Les soupapes d'admission 28 sont commandées en ouverture et en fermeture par tous moyens connus permettant de faire varier la loi de levée de ces soupapes. Plus particulièrement, ces moyens permettent de réaliser une double levée de ces soupapes pendant le fonctionnement du moteur nécessitant une forte puissance, en particulier à faibles régimes, ou une simple levée lors du fonctionnement conventionnel de ce moteur aux moyens et forts régimes.

Pour cela, il est utilisé des moyens de commande 40, de type arbre à cames WA (Variable Valve Actuation), qui permettent de réaliser les deux lois de levées de ces soupapes. Une première loi permet d'effectuer au moins une séquence d'ouverture/fermeture des soupapes d'admission 28 pendant la phase d'échappement E du moteur suivie d'une séquence conventionnelle d'ouverture/fermeture de ces soupapes pendant la phase d'admission A. L'autre loi de levée permet d'exécuter uniquement une séquence d'ouverture/fermeture des soupapes d'admission pendant la phase d'admission A du moteur.

A titre d'exemple non limitatif, cet arbre à cames comporte une came associée à une seconde came permettant d'assurer la loi de double levée de ces soupapes d'admission pendant la phase d'échappement E et d'admission A du moteur ainsi qu'un dispositif de débrayage rendant inopérationnelle l'une des cames, par exemple la seconde came, pour réaliser la simple levée des soupapes d'admission pendant la phase d'admission du moteur.

Les soupapes d'échappement 18 sont commandées en ouverture et fermeture par des moyens de commande 42 permettant aussi de faire varier la loi de levée de ces soupapes. Ces moyens sont également de type arbre à cames WA (Variable Valve Actuation), qui permettent de réaliser une variation de l'angle de vilebrequin pour lequel débute l'ouverture de ces soupapes d'échappement avec ou sans modification de leur angle de vilebrequin pour lequel se réalise la fermeture lors de sa phase d'échappement.

Bien entendu et cela sans sortir du cadre de l'invention, ces moyens de commande 40 et 42 peuvent être des moyens de commande spécifiques pour chaque soupape, comme un actionneur électromagnétique, électropneumatique ou autre, qui agit directement sur la tige de la soupape.

Il est à noter que le terme "levée" correspond à la représentation graphique (selon deux axes) du mouvement d'une soupape à partir du début de son ouverture de l'orifice de la tubulure jusqu'à la fin de sa fermeture de cet orifice en passant par sa position de pleine ouverture.

Ce moteur comprend également une unité de calcul 44, dite calculateur-moteur, qui contient des cartographies ou des tables de données permettant, en fonction des valeurs des paramètres du moteur transmises par des lignes de données 46, comme notamment la pression d'admission Pa dans le collecteur d'admission 30 et la pression d'échappement Pe dans le collecteur d'échappement 20, le régime du moteur ou sa charge, d'évaluer la puissance que doit générer ce moteur pour répondre à la demande du conducteur du véhicule.

Plus précisément, ce calculateur permet, en fonction de ces valeurs, de contrôler les lois de levée de soupapes d'admission 28 par une ligne de commande 48 agissant sur les moyens 40 de façon à permettre une simple levée ou une double levée de ces soupapes. Ce calculateur permet également de contrôler les lois de levée des soupapes d'échappement 18 par une ligne de commande 50 agissant sur les moyens 42 de façon à permettre la modification de leur angle de vilebrequin pour l'ouverture et/ou la fermeture.

Ainsi, lorsque le moteur doit évoluer dans des conditions qui correspondent à une demande de forte puissance, le calculateur contrôle ce moteur pour qu'il fonctionne avec un balayage des gaz brûlés résiduels présents dans la chambre de combustion lorsque la pression Pa relevée dans le collecteur d'admission est supérieure à la pression Pe régnant dans le collecteur d'échappement.

Dans l'exemple représenté sur cette figure, le moteur fonctionne avec un cycle qui est dénommé 1, 3, 4, 2 dans lequel, durant le cycle de combustion et à un angle de rotation déterminé du vilebrequin, le cylindre 10₁ est en fin de phase d'échappement et en début de phase d'admission avec une étape de balayage des gaz brûlés présents dans la chambre de combustion par ouverture simultanée des soupapes d'admission et d'échappement, le cylindre suivant 10₂ est en phase de compression avec les soupapes d'échappement et d'admission en position fermée, le cylindre 10₃ en phase d'échappement avec ouverture des soupapes d'échappement et le dernier cylindre (cylindre 10₄) est en phase de détente, les soupapes d'échappement et d'admission étant fermées.

Afin d'éviter que l'onde de pression des gaz d'échappement provenant du cylindre en phase d'échappement et circulant dans le collecteur d'échappement 20 ne vienne perturber l'évacuation des gaz d'échappement lors de l'étape de balayage des gaz brûlés du cylindre en balayage, il est prévu de modifier l'angle de vilebrequin pour le début de l'ouverture des soupapes d'échappement du cylindre 10 en balayage. Par cela, il est possible de positionner le pic de cette onde de pression à la fin ou après l'étape de balayage du cylindre concerné de façon à ce que le différentiel de pression entre la pression d'admission et la pression d'échappement soit favorable à la pression d'admission et ce jusqu'à la fermeture des soupapes d'échappement.

On se rapporte maintenant à la figure 2 qui montre des courbes illustrant les différentes lois de levée des soupapes d'admission 28 et d'échappement 18 du cylindre 10 en balayage entre une position d'ouverture 0 et de fermeture F en fonction de l'angle de rotation de vilebrequin °V.

Cette figure est à associer avec la figure 3 qui illustre les courbes de pressions d'admission Pa et d'échappement Pe durant ces mêmes angles de rotation de vilebrequin.

Pour les moteurs de l'état de la technique avec balayage des gaz brûlés selon FR 2 926 850, les soupapes d'échappement Se suivent (pendant la phase d'échappement E du moteur) une séquence conventionnelle d'ouverture/fermeture entre le point mort bas échappement (PMBe) et le point mort haut admission (PMHa) du piston, comme cela est illustré par la courbe en trait fin, de façon à évacuer les gaz d'échappement contenus dans la chambre de combustion vers le collecteur d'échappement 20.

Pendant cette séquence d'ouverture/fermeture de la soupape d'échappement Se, une séquence d'ouverture/fermeture de la soupape d'admission 28 est réalisée de façon à effectuer le balayage des gaz brûlés résiduels.

Comme visible sur la figure 3, la courbe de pression à l'échappement Peₐₐ de cet art antérieur comprend un point d'intersection P₁, situé après le PMBe, avec la courbe de la pression d'admission Pa et au delà duquel la pression échappement est inférieure à la pression admission. Cette courbe Peₐₐ comprend un autre point d'intersection P₂, situé avant le PMHa, avec la courbe de la pression d'admission Pa, au delà duquel la pression échappement est supérieure à la pression d'admission. La courbe Peₐₐ se poursuit jusqu'à une zone de pic de pression Peₘₐₓ résultant de la combinaison avec l'onde de pression de l'échappement provenant du cylindre voisin puis décroit jusqu'aux environs du PMBc.

Dans cette configuration, le balayage des gaz brûlés n'est plus réalisé à partir du point P₂ compte tenu du différentiel de pression en faveur de la pression échappement alors que les soupapes d'échappement et d'admission sont encore en position d'ouverture. A partir de ce point et jusqu'à la fermeture des soupapes d'échappement au PMHa, il se produit une phase non souhaitée de réintroduction de gaz brûlés dans la chambre de combustion accompagnée d'une expulsion au travers des soupapes d'admission de l'air suralimenté déjà présent dans la chambre de combustion.

Pour éviter cela, il est prévu que l'angle de vilebrequin e1 pour le début de la séquence d'ouverture/fermeture des soupapes d'échappement 18 ne soit pas confondu avec le PMBe mais soit situé après ce PMBe de manière à obtenir une courbe de pression d'échappement Pe, qui est décalé vers la droite comme illustré en trait gras sur la figure 3.

Avantageusement, il est prévu que cet angle e1 soit compris entre une valeur supérieure à 0° et inférieure ou égale à 50° après le PMBe.

Grâce à ce décalage du début de l'ouverture des soupapes d'échappement, le point P'₁ avec la courbe Pa est décalé sensiblement à un angle de vilebrequin a1 et le point d'intersection P'₂ avec la courbe de la pression d'admission Pa est situé bien après le PMHa.
Ceci a pour effet que la pression échappement Pe reste toujours inférieure à la pression d'admission jusqu'à la fermeture des soupapes d'échappement en augmentant ainsi le domaine favorable au balayage des gaz brûlés. La courbe Pe se poursuit jusqu'à la zone de pic de pression point Pe'ₘₐₓ résultant de la combinaison avec l'onde de pression de l'échappement provenant de l'échappement du cylindre voisin.
Ceci est du au fait que l'angle d'ouverture de la souplesse échappement et donc le positionnement de l'onde de pression détermine le phasage de la pression échappement instantanée. C'est pour cette raison que Pe est décalée par rapport à Peₐₐ en ouvrant la soupape échappement plus tardivement

Ainsi pour des conditions de fonctionnement du moteur qui correspondent à une demande de forte puissance, les soupapes d'échappement 18 sont commandés par les moyens de commande 42 pour qu'elles suivent, pendant la phase d'échappement E, une séquence d'ouverture/fermeture entre le point e1 après le PMBe et le PMHa.
Conjointement à cette séquence d'ouverture/fermeture des soupapes d'échappement, les moyens de commande 40 sont pilotés par le calculateur 44 pour réaliser au moins une séquence d'ouverture/fermeture des soupapes d'admission 28 pendant cette phase d'échappement E et durant la séquence d'ouverture/fermeture des soupapes d'échappement.

Cette séquence est plus particulièrement réalisée lorsque le calculateur reçoit comme information que la pression Pa considérée au niveau des soupapes d'admission 28 est supérieure à la pression Pe relevée au niveau des soupapes d'échappement 18.

Plus particulièrement, ces soupapes d'admission s'ouvrent à l'angle a1 après l'angle e1 de l'ouverture des soupapes d'échappement (ou à cet angle e1) et se ferment au PMHa en introduisant de l'air suralimenté dans la chambre de combustion.

Compte tenu du différentiel de pression entre la pression d'admission Pa et la pression d'échappement Pe en faveur de la pression d'admission entre l'angle a1 et le PMHa, les gaz d'échappement contenus dans la chambre de combustion 12 sont évacués au travers des soupapes d'échappement 18 vers le collecteur d'échappement 20. Ces gaz d'échappement sont de ce fait remplacés par de l'air suralimenté qui va permettre de pouvoir augmenter globalement la quantité d'air présent dans la chambre de combustion à la fin de la phase d'admission A du moteur.

Durant cette phase d'admission A du moteur qui suit la phase d'échappement E, le calculateur 44 pilote les moyens de commande 40 de ces soupapes d'admission 28 de manière à ce qu'elles s'ouvrent à nouveau conventionnellement au voisinage du PMHa et se referment au voisinage du point mort bas compression (PMBc).

La levée des soupapes d'admission entre les angles a1 et le PMHa correspond à une zone de la phase d'échappement dans laquelle le différentiel de pression entre la pression d'admission Pa et la pression d'échappement Pe est globalement le plus élevé (voir figure 3) pour la phase d'échappement considérée tout en étant positif pour la pression d'admission.

Avantageusement, la hauteur de la levée des soupapes d'admission est sensiblement égale à la hauteur de la levée des soupapes d'échappement mais il peut être envisagé de faire varier la hauteur de la levée de ces soupapes d'admission, comme par exemple entre une pleine ouverture O et un tiers d'ouverture O/3, de façon à pouvoir contrôler l'évacuation des gaz brûlés résiduels, comme cela est illustré en traits mixtes sur la figure 2.

De même, l'étalement de la levée des soupapes d'admission, pendant la phase d'échappement, peut être variable de façon à débuter la séquence d'ouverture/fermeture à l'angle a1 et la terminer à un angle de vilebrequin placé avant le PMHa.

De manière préférentielle, la levée maximale et l'étendue maximale de ces soupapes d'admission pendant la phase d'échappement sont moindres que celles des soupapes d'échappement.

Ainsi, pendant la seconde levée des soupapes d'admission, de l'air suralimenté vient s'ajouter à l'air suralimenté déjà présent dans la chambre de combustion 12 après l'opération de balayage pour obtenir à la fin de la phase d'admission A une plus grande quantité d'air.

Lors du fonctionnement conventionnel du moteur sans balayage des gaz brûlés, le calculateur 44 pilote les moyens de commande 42 de façon à réaliser, durant la phase d'échappement E, une séquence conventionnelle d'ouverture/fermeture des soupapes d'admission. Ce calculateur commande également les moyens de commande 40 de façon à ne pas réaliser, durant la phase d'échappement E, une séquence d'ouverture/fermeture des soupapes d'admission 18. Cette phase d'échappement est suivie d'une phase d'admission A durant laquelle les soupapes d'admission suivent une séquence conventionnelle d'ouverture/fermeture entre le PMHa et le PMBc.

Grâce à l'invention, il est très facile de passer d'un fonctionnement du moteur avec balayage de gaz d'échappement avec possibilité de réglage des paramètres de balayage (quantité de gaz brûlés évacuée, moment de l'évacuation des gaz brûlés, ...) en agissant sur la loi de levée de soupapes d'admission pendant la phase d'échappement à un fonctionnement conventionnel de ce moteur, et inversement. En outre, la modularité de la loi d'admission permet de gérer le balayage des gaz brûlés résiduels en fonction de la différence de pression entre la pression d'admission et la pression d'échappement.

La présente invention n'est pas limitée à l'exemple décrit mais englobe toutes variantes et tous équivalents dans le cadre de la revendication 1.

## Revendications

1. Procédé de balayage des gaz brûlés résiduels d'un moteur à combustion interne multi cylindres (10) à injection directe, notamment de type Diesel, avec un piston se déplaçant alternativement entre un point mort haut (PMH) et un point mort bas (PMB), et selon lequel on réalise une phase de balayage des gaz brûlés par une séquence d'ouverture/fermeture d'au moins une soupape d'échappement (18) lors la phase d'échappement (E) du moteur et par au moins une séquence d'ouverture/fermeture d'au moins une soupape d'admission (28) pendant cette séquence d'ouverture/fermeture de la soupape d'échappement, **caractérisé en ce qu'**il consiste à débuter la séquence d'ouverture/fermeture de la soupape d'échappement (18) à un angle de vilebrequin (e1) situé après le point mort bas de la phase d'échappement (PMBe) et à terminer cette séquence au plus au point mort haut suivant (PMHa).

2. Procédé de balayage des gaz brûlés résiduels d'un moteur selon la revendication 1, **caractérisé en ce qu'**il consiste à débuter la séquence d'ouverture/fermeture de la soupape d'admission (28) à l'angle de vilebrequin (e1) du début la séquence d'ouverture/fermeture de la soupape d'échappement (18).

3. Procédé de balayage des gaz brûlés résiduels d'un moteur selon la revendication 1, **caractérisé en ce qu'**il consiste à débuter la séquence d'ouverture/fermeture de la soupape d'admission (28₁) à un angle de vilebrequin (a1) après l'angle de vilebrequin (e1) du début la séquence d'ouverture/fermeture de la soupape d'échappement (18).

4. Procédé de balayage des gaz brûlés résiduels d'un moteur selon l'une des revendications précédentes, **caractérisé en ce qu'**il consiste à réaliser la fermeture de la soupape d'admission (28) au plus à la fin de la phase d'échappement (E).

5. Procédé de balayage des gaz brûlés résiduels d'un moteur selon l'une des revendications précédentes, **caractérisé en ce qu'**il consiste à réaliser au moins une séquence d'ouverture/fermeture de la soupape d'admission (28) dans une zone (a1-PMHa) de la phase d'échappement où le différentiel de pression entre la pression d'admission (Pa) et la pression d'échappement (Pe) est le plus élevé.

6. Procédé de balayage des gaz brûlés résiduels d'un moteur selon l'une des revendications précédentes, **caractérisé en ce qu'**il consiste à diminuer la hauteur de la levée de la soupape d'admission (28₁) pendant la phase d'échappement de manière à ce qu'elle soit inférieure à la hauteur de la levée de la soupape d'échappement.

## Patentansprüche

1. Verfahren zum Spülen der verbrannten Restgase eines Verbrennungsmotors mit mehreren Zylindern (10) mit Direkteinspritzung, insbesondere des Typs Diesel, mit einem Kolben, der sich abwechselnd zwischen einem oberen Totpunkt (OTP) und einem unteren Totpunkt (UTP) bewegt und gemäß dem man eine Spülphase der verbrannten Gase nach einer Öffnungs-/Schließsequenz mindestens eines Auslassventils (18) bei der Auslassphase (E) des Motors ausführt und durch mindestens eine Öffnungs-/Schließsequenz mindestens eines Einlassventils (28) während dieser Öffnungs-/Schließsequenz des Auslassventils, **dadurch gekennzeichnet, dass** es darin besteht, die Öffnungs-/Schließsequenz des Auslassventils (18) bei einem Kurbelwellenwinkel (e1) zu beginnen, der nach dem unteren Totpunkt der Auslassphase (UTPe) liegt und diese Sequenz maximal am darauf folgenden oberen Totpunkt (OTPa) zu beenden.

2. Spülverfahren der verbrannten Restgase eines Motors nach Anspruch 1, **dadurch gekennzeichnet, dass** es darin besteht, die Öffnungs-/Schließsequenz des Einlassventils (28) bei dem Kurbelwellenwinkel (e1) des Beginns der Öffnungs-/Schließsequenz des Auslassventils (18) zu beginnen.

3. Spülverfahren der verbrannten Restgase eines Motors nach Anspruch 1, **dadurch gekennzeichnet, dass** es darin besteht, die Öffnungs-/Schließsequenz des Einlassventils (28₁) bei einem Kurbelwellenwinkel (a1) nach dem Kurbelwellenwinkel (e1) des Beginns der Öffnungs-/Schließsequenz des Auslassventils (18) zu beginnen.

4. Spülverfahren der verbrannten Restgase eines Motors nach einem der vorhergehenden Ansprüche, **dadurch gekennzeichnet, dass** es darin besteht, das Schließen des Einlassventils (28) spätestens an dem Ende der Auslassphase (E) auszuführen.

5. Spülverfahren der verbrannten Restgase eines Motors nach einem der vorhergehenden Ansprüche, **dadurch gekennzeichnet, dass** es darin besteht, mindestens eine Öffnungs-/Schließsequenz des Einlassventils (28) in eine Bereich (a1-OTPa) der Auslassphase auszuführen, in dem der Druckunterschied zwischen dem Einlassdruck (Pa) und dem Auslassdruck (Pe) am höchsten ist.

6. Spülverfahren der verbrannten Restgase eines Motors nach einem der vorhergehenden Ansprüche, **dadurch gekennzeichnet, dass** es darin besteht, die Höhe des Hubs des Einlassventils (28₁) während der Auslassphase derart zu verringern, dass sie kleiner ist als die Höhe des Hubs des Auslassventils.

## Claims

1. A method of scavenging the residual burnt gas of a direct-injection multicylinder internal-combustion engine (10), notably of diesel type, with a piston moving in a reciprocating motion between a top dead center (PMH) and a bottom dead center (PMB), wherein a burnt gas scavenging stage is carried out by means of a sequence of opening/closing at least one exhaust valve (18) during exhaust phase (E) of the engine and of at least one sequence of opening/closing at least one intake valve (28) during this exhaust valve opening/closing sequence, **characterized in that** it consists in starting the opening/closing sequence of exhaust valve (18) at a crank angle (e1) positioned after the bottom dead center of the exhaust phase (PMBe) and in ending this sequence at most at the next top dead center (PMHa).

2. A method of scavenging the residual burnt gas of an engine as claimed in claim 1, **characterized in that** it consists in starting the opening/closing sequence of intake valve (28) at crank angle (e1) of the opening/closing sequence start of exhaust valve (18).

3. A method of scavenging the residual burnt gas of an engine as claimed in claim 1, **characterized in that** it consists in starting the opening/closing sequence of intake valve (28₁) at a crank angle (a1) after crank angle (e1) of the opening/closing sequence start of exhaust valve (18).

4. A method of scavenging the residual burnt gas of an engine as claimed in any one of the previous claims, **characterized in that** it consists in performing closing of intake valve (28) at most at the end of exhaust phase (E).

5. A method of scavenging the residual burnt gas of an engine as claimed in any one of the previous claims, **characterized in that** it consists in performing at least one opening/closing sequence of intake valve (28) in a zone (a1-PMHa) of the exhaust phase where the pressure differential between intake pressure (Pa) and exhaust pressure (Pe) is the highest.

6. A method of scavenging the residual burnt gas of an engine as claimed in any one of the previous claims, **characterized in that** it consists in decreasing the height of the lift of intake valve (28₁) during the exhaust phase so that it is lower than the height of the exhaust valve lift.
